(19) Europäisches Patentamt / European Patent Office / Office européen des brevets

(11) **EP 1 926 220 A1**

(12) **DEMANDE DE BREVET EUROPEEN**

(43) Date de publication:
**28.05.2008 Bulletin 2008/22**

(51) Int Cl.:
***H04B 3/46*** (2006.01)

(21) Numéro de dépôt: **07120999.3**

(22) Date de dépôt: **19.11.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **21.11.2006 FR 0655007**

(71) Demandeur: **France Télécom**
**75015 Paris (FR)**

(72) Inventeurs:
• **Wahibi, Issam**
**ILE DE FRANCE FRANCE TELECOM**
**22300 Lannion (FR)**
• **Ouzzif, Meryem**
**ILE DE FRANCE FRANCE TELECOM**
**22300 Lannion (FR)**
• **Le Masson, Jérôme**
**ILE DE FRANCE FRANCE TELECOM**
**22300 Lannion (FR)**

(54) **Procédé de sélection spatio-fréquentielle des coefficients de couplage basé sur une contrainte de performance en vue d'une précompensation/annulation partielle**

(57) L'invention concerne un procédé de traitement d'interférences dans un canal de transmission comportant N lignes actives, chacune desdites lignes actives véhiculant un signal utile, une interférence générée par le signal utile d'une première ligne active i sur le signal utile d'une deuxième ligne active k étant représentée par un coefficient de couplage, l'ensemble des interférences présentes dans ledit canal de transmission pouvant être modélisé au moyen d'une matrice carrée de dimension NxN dont les éléments non diagonaux sont les différents coefficients de couplage, ledit procédé comportant une étape de sélection d'un ensemble de coefficients de couplage.

Un tel procédé comprend une étape de détermination d'une influence des coefficients de couplage sur le débit dudit canal de transmission, et ladite étape de sélection permet de sélectionner ceux des coefficients qui présentent la plus grande influence.

EP 1 926 220 A1

**Description**

La présente invention concerne de manière générale le domaine des télécommunications et plus particulièrement le domaine des réseaux d'accès utilisant un câble constitué de lignes en cuivre comme moyen de transmission des données.

Dans de tels réseaux d'accès, il est connu d'utiliser des techniques de modulation des signaux transportant des données, connues sous le nom de DSL (pour Digital Subscriber Line, ou ligne numérique d'abonné en français). De telles techniques utilisent une modulation multi-porteuses de type DMT (pour Discrete MultiTone, ou multitonalité discrète en français).

Dans un réseau d'accès sur paire de cuivre, chaque ligne constitutive du câble relie un multiplexeur à un utilisateur final. Pour un ensemble d'utilisateurs finaux donnés, à l'intérieur d'un même immeuble par exemple, les lignes peuvent être regroupées dans un seul câble connecté à la sortie du multiplexeur. Dans le cadre des techniques DSL, un tel multiplexeur est appelé DSLAM (pour Digital Subscriber Line Access Multiplexor, ou en français multiplexeur d'accès de ligne d'abonné numérique).

Le signal utile émis par le multiplexeur sur une ligne à destination d'un utilisateur final est transmis au moyen d'une pluralité de fréquences porteuses. Le signal émis sur l'ensemble des fréquences porteuses pendant une période de temps donnée est appelé « symbole ». Le nombre de fréquences porteuses est variable et vaut en général quelques milliers, 4096 ou 8192 par exemple, et l'intervalle entre deux porteuses est de l'ordre de 4 ou 8 kHz. Un symbole DMT peut donc couvrir une bande de fréquences allant jusqu'à 30 MHz.

A l'intérieur d'un même câble, les couplages électromagnétiques entre les différentes lignes sont à l'origine d'interférences qui perturbent la transmission des signaux sur les lignes. Un tel phénomène est appelé phénomène de diaphonie.

Il existe deux phénomènes de diaphonie principaux. Un premier type de diaphonie, dit NEXT (pour Near-End CrossTalk, ou paradiaphonie en français) intervient lorsque le signal remontant, c'est à dire un signal allant d'un utilisateur final vers le DSLAM, est couplé avec un signal descendant, c'est-à-dire un signal allant du DSLAM vers un utilisateur final. Un tel phénomène de paradiaphonie est corrigé en utilisant une technique dite FDD (pour Frequency Division Duplexing, ou en français duplexage par répartition en fréquence).

Un deuxième type de diaphonie, dit FEXT (pour Far-End CrossTalk, ou télédiaphonie en français) intervient quand deux signaux transmis dans un même sens, remontant ou descendant, sont couplés. La télédiaphonie constitue une source importante de bruit sur les lignes courtes ce qui représente un inconvénient majeur pour les opérateurs de télécommunications. En effet, cela limite les performances des systèmes, notamment en termes de débit utile.

Il est connu de corriger les effets de la télédiaphonie afin d'améliorer les performances du réseau et notamment la qualité de la réception des données et le débit utile du canal de transmission. Dans le sens remontant, la correction de la télédiaphonie consiste à en annuler les effets. Dans le sens descendant, cette correction consiste en la précompensation de ses effets.

Ces deux techniques reposent sur une série de calculs matriciels dont les divers coefficients représentent les effets des différentes lignes constitutives du réseau les unes sur les autres.

Cependant, un inconvénient de ces techniques de correction réside dans le fait que de telles opérations sont complexes à effectuer et réclament une puissance de calcul importante ce qui est susceptible de limiter la mise en oeuvre de ces technologies.

Dans leurs articles intitulés Partial Crosstalk Precompensation for Downstream VDSL, paru dans Elsevier Signal Processing, Novembre 2004, et Partial Crosstalk Cancellation for Upstream VDSL paru dans EURASIP Journal on Applied Signal Processing, Août 2004, Cendrillon et al. proposent un traitement partiel de la télédiaphonie.

En partant de la constatation que dans un réseau utilisant la technologie DSL, la majorité des effets de la télédiaphonie est due à une petite portion des lignes constitutives d'un même câble, et que ces effets sont limités à une petite portion des fréquences véhiculées, ils sont arrivés à la conclusion qu'il est possible de traiter la télédiaphonie de manière partielle.

Dans un câble, ou canal de transmission, comportant N lignes véhiculant chacune un signal, la fonction de transfert du canal de transmission peut être modélisée sous la forme d'une matrice **H** carrée de dimensions NxN. Les coefficients diagonaux de la matrice $h_{ii}$ représentent les coefficients d'atténuation de chacune des N lignes du canal de transmission alors que les coefficients non diagonaux $h_{ik}$ de la matrice représentent les coefficients de couplage d'une ligne k sur une ligne i et donc la télédiaphonie.

Afin de limiter la complexité des calculs lors du traitement de la télédiaphonie, Cendrillon et al. proposent de ne sélectionner qu'une partie des coefficients non diagonaux de la matrice à impliquer dans ces calculs.

La sélection des coefficients de couplage se fait sur la base d'un critère de complexité des calculs à mettre en oeuvre pour corriger la télédiaphonie entre deux lignes.

A la suite de l'étape de sélection, deux listes de coefficients de couplage sont obtenues. Une première liste contient l'ensemble des coefficients de couplage qui font l'objet des calculs de précompensation ou d'annulation. Une deuxième liste contient le reste des coefficients de couplage. Les coefficients de couplage de cette deuxième liste sont négligés aux fins des calculs et leur valeur, dans la matrice **H** est mise à zéro.

En limitant le nombre de coefficients non diagonaux non nuls dans la matrice **H,** il est possible de réduire la complexité des calculs de précompensation ou d'annulation de la télédiaphonie.

Bien que permettant de réduire la complexité des calculs effectués dans le cadre du traitement de la télédiaphonie, la solution proposée dans ces articles n'est pas pleinement satisfaisante en termes de performances obtenues. En effet dans cette méthode, s'il est possible de savoir par avance dans quelle mesure la complexité des calculs est réduite, il n'est, par contre pas possible de savoir quel est l'impact du traitement de la télédiaphonie ainsi réalisé sur les performances du système de transmission. Ainsi, à trop vouloir diminuer la complexité des calculs liés au traitement de la télédiaphonie, on risque une dégradation importante des performances du système de transmission telles que par exemple le débit utile.

Une telle solution ne satisfait donc que partiellement les opérateurs de télécommunications dont le principal enjeu est de garantir un débit utile minimum suffisamment élevé de sorte à pouvoir offrir des services de qualité à leurs clients.

Il existe, par conséquent un besoin d'une méthode de traitement de la télédiaphonie qui satisfasse aux contraintes fixées par les opérateurs de télécommunications tant en termes de complexité de calculs qu'en termes de performances du réseau.

L'invention répond à ce besoin en proposant un procédé de traitement d'interférences dans un canal de transmission comportant N lignes actives, chacune desdites lignes actives véhiculant un signal utile, une interférence générée par le signal utile d'une première ligne active i sur le signal utile d'une deuxième ligne active k étant représentée par un coefficient de couplage, ledit procédé comportant une étape de détermination d'une influence des coefficients de couplage sur les performances dudit canal de transmission et une étape de sélection d'un ensemble de coefficients de couplage à traiter permettant de sélectionner ceux des coefficients de couplage présentant la plus grande influence.

Un tel procédé est particulier en ce qu'un coefficient de couplage est sélectionné lorsque l'éloignement de la valeur d'un rapport signal à bruit calculé sans tenir compte des coefficients de couplage à la valeur du rapport signal à bruit calculé en tenant compte dudit coefficient de couplage est inférieur à une marge liée à une perte en débit définie préalablement.

Afin de réduire la complexité des calculs à effectuer pour traiter les interférences présentes dans le canal de transmission étudié, le procédé selon l'invention propose de sélectionner, pour chacune des fréquences porteuses, parmi les $N(N-1)^2$ coefficients de couplage, une partie seulement de ceux-ci. Ainsi, en limitant, pour chaque fréquence porteuse, le nombre de coefficients à traiter, le nombre de calculs à effectuer afin de corriger les effets des interférences s'en trouve diminué.

Le fait de sélectionner les coefficients de couplage à traiter sur la base de l'influence de leur traitement sur les performances du canal de transmission permet de garantir le débit utile de celui-ci ce qui n'est pas le cas dans l'art antérieur qui sélectionne les coefficients de couplage à traiter en fonction de la complexité des calculs à effectuer pour réduire les effets des interférences du canal de transmission.

Le nombre de coefficients de couplage constituant l'ensemble des coefficients de couplage à traiter varie d'une ligne active à une autre en fonction de la fréquence du signal utile véhiculé ainsi que de la localisation de la ligne dans le câble de transmission. En effet, une ligne active située à la périphérie du câble est moins sujette aux interférences dues aux autres lignes actives du système qu'une ligne active située au coeur du câble de transmission.

Le rapport signal à bruit permet de calculer le débit maximal théorique sur une ligne active i en l'absence d'interférences dues aux autres lignes actives du canal de transmission, ou lorsque toutes les interférences ont été corrigées.

Dans un tel procédé, la sélection des coefficients de couplage à traiter se fait en fonction d'une marge de perte en débit. Cette marge est, par exemple, établie au regard du débit maximal théorique, calculé à partir de la valeur du rapport signal à bruit, de la ligne active i. En général, elle correspond à une fraction du débit utile théorique de la ligne active i par exemple de l'ordre de 10%.

La valeur de marge peut être fixée au préalable par les opérateurs de télécommunications, afin d'assurer une qualité de service identique aux utilisateurs.

Selon une première caractéristique du procédé objet de l'invention, les coefficients de couplage présentant la plus grande influence sont ceux qui entraînent la plus forte diminution de la valeur d'un rapport signal à bruit plus interférences calculé en tenant compte desdits coefficients de couplage.

En effet, les coefficients de couplage interviennent dans le calcul du rapport signal à bruit plus interférence. Des valeurs élevées de ces coefficients augmentent le niveau des interférences ce qui dégrade le rapport signal à bruit plus interférence de la ligne active considérée.

Selon une autre caractéristique du procédé selon l'invention, la marge de perte en débit est identique pour toutes les lignes actives du canal de transmission.

Selon une autre caractéristique du procédé objet de l'invention, pour une ligne active donnée du canal de transmission, la marge de perte en débit est fonction de l'atténuation de la ligne active.

Selon une autre caractéristique du procédé objet de l'invention, préalablement à l'étape de détermination, les coefficients de couplage sont ordonnés, et les coefficients de couplage ainsi ordonnés sont balayés jusqu'à obtention d'un premier ensemble de coefficients de couplage à traiter, et un deuxième ensemble de coefficients de couplage non traités.

L'ordonnancement des coefficients de couplage $h_{ik}$ permet d'optimiser la sélection et la constitution de l'ensemble des coefficients de couplage à traiter.

Les coefficients de couplage $h_{ik}$ faisant partie du deuxième ensemble de coefficients de couplage sont mis à zéro de sorte à ne pas être pris en compte lors du traitement en vue de réduire les interférences.

L'invention concerne encore un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de gestion selon l'invention.

L'invention concerne enfin un équipement réseau connecté à un canal de transmission comportant N lignes actives, chacune desdites lignes actives véhiculant un signal utile, une interférence générée par le signal utile d'une première ligne active i sur le signal utile d'une deuxième ligne active k étant représentée par un coefficient de couplage, ledit dispositif comportant des moyens de détermination d'une influence des coefficients de couplage sur les performances dudit canal de transmission et des moyens de sélection d'un ensemble de coefficients de couplage à traiter permettant de sélectionner ceux des coefficients de couplage présentant la plus grande influence.

Un tel équipement réseau permet de sélectionner un coefficient de couplage lorsque l'éloignement de la valeur d'un rapport signal à bruit calculé sans tenir compte des coefficients de couplage à la valeur du rapport signal à bruit calculé en tenant compte dudit coefficient de couplage est inférieur à une marge liée à une perte en débit définie préalablement.

D'autres caractéristiques et avantages apparaîtront à la lecture de modes de réalisation préférés décrits en référence aux dessins dans lesquels :

- la figure 1 représente de manière schématique un réseau d'accès sur paire de cuivre utilisant les techniques de modulations DSL,

- la figue 2 représente un premier mode de réalisation du procédé de traitement partiel des interférences selon l'invention,

- la figue 3 représente un deuxième mode de réalisation du procédé de traitement partiel des interférences selon l'invention,

- la figure 4 est un diagramme représentant l'évolution de la réduction de la complexité des calculs en fonction du pourcentage de bits sacrifiés selon deux modes de sélection des bits sacrifiés.

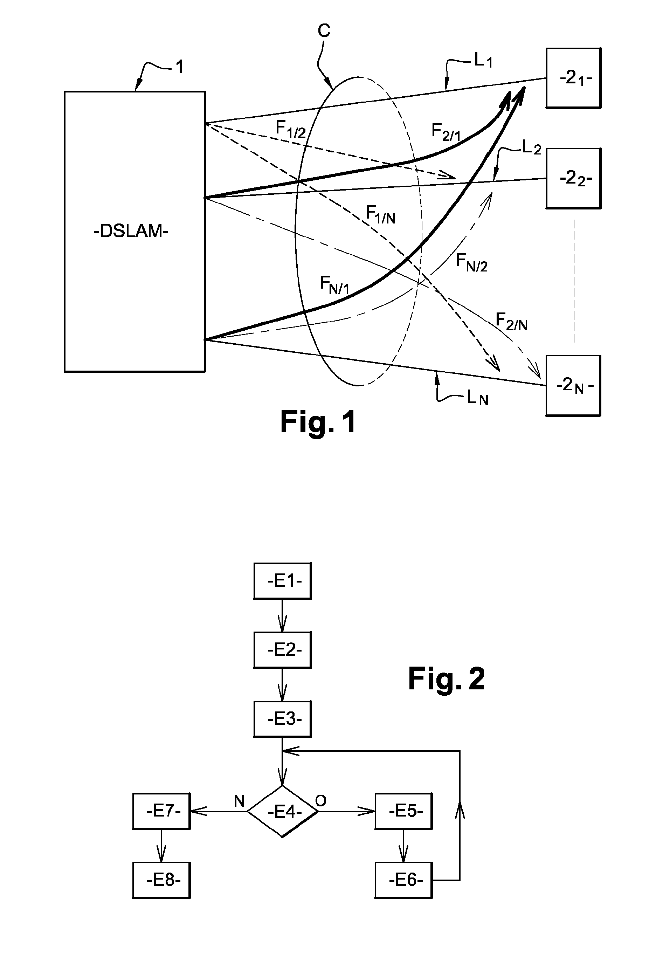

La figure 1 représente un système dans lequel le procédé objet de l'invention est mis en oeuvre. Un tel système comporte un DSLAM 1 connecté à N terminaux utilisateurs $2_i$, $i \in \{1, ....., N\}$ au moyen d'un câble C, ou canal de transmission, comprenant N lignes actives $L_i$ constituées chacune d'une paire de cuivre servant de milieu de transport bidirectionnel aux données échangées par le DSLAM 1 et les terminaux utilisateurs $2_i$.

Chaque ligne active $L_i$ véhicule un signal utile contenant des données soit dans le sens remontant soit dans le sens descendant. Lorsque plusieurs de ces signaux utiles sont transmis dans un même sens, remontant ou descendant, un phénomène de couplage électromagnétique, ou télédiaphonie, intervient entre les différentes lignes actives du canal de transmission C donnant naissance à des interférences. Ces interférences sont représentées sur la figure 1 par les différentes flèches $F_{i/k}$, où $F_{i/k}$ représente les interférences dues au signal utile de la ligne active i sur le signal utile de la ligne active k. La présence de ces interférences perturbe la réception des signaux utiles de sorte que le traitement de ces effets permette d'améliorer les performances de la transmission.

Dans un système tel que décrit en référence à la figure 1, la relation entre les signaux émis à une fréquence porteuse f donnée, à une première extrémité du canal de transmission C et les signaux reçus à une deuxième extrémité du canal de transmission C peut s'écrire :

$$\mathbf{y}_f = \mathbf{H}_f.\mathbf{x}_f + \mathbf{n}_f$$

où $\mathbf{x}_f$ représente le vecteur unicolonne de dimensions Nx1 des signaux émis à la fréquence porteuse f sur les N lignes actives du canal de transmission, $y_f$ le vecteur unicolonne de dimensions Nx1 des signaux reçus, et $\mathbf{H}_f$ la matrice associée à la fonction de transfert du canal de transmission à la fréquence porteuse f, de dimensions NxN et $\mathbf{n}_f$ un vecteur unicolonne de dimensions Nx1 représentant un bruit additif blanc gaussien de puissance $N_0$.

La diagonale de la matrice $\mathbf{H}_f$ correspond aux atténuations des N lignes actives du canal de transmission et les éléments non diagonaux $h_{ij}$ avec $i \neq j$, représentent les coefficients de couplage télédiaphonique entre les différentes lignes actives i et j.

$$\mathbf{H}_f = \begin{bmatrix} h_{11} & h_{12} & \cdots & h_{1L} \\ h_{21} & h_{22} & \cdots & h_{2L} \\ \vdots & \vdots & \ddots & \vdots \\ h_{L1} & h_{L2} & \cdots & h_{LL} \end{bmatrix}$$

En vue de corriger les effets de la télédiaphonie, il est connu d'appliquer un précompensateur ou un annuleur sur chacune des lignes actives du système et pour toutes les fréquences porteuses.

Un précompensateur ou un annuleur peut être modélisé sous la forme d'une matrice dite matrice de précompensation ou matrice d'annulation.

A titre d'exemple nous décrivons ici une méthode connue de précompensation de la télédiaphonie. La méthode est décrite pour une fréquence porteuse donnée, c'est pourquoi, afin de simplifier les notations, l'indice f est supprimé.

Une matrice de précompensation $\mathbf{P}$ utilisée pour corriger les effets de la télédiaphonie s'exprime sous la forme :

$$\mathbf{P} = \mathbf{H}^{-1}.diag(\mathbf{H}) = \mathbf{H}^{-1}.\mathbf{D}$$

où $\mathbf{D}$ représente la matrice diagonale constituée par les éléments diagonaux de $\mathbf{H}$ et $\mathbf{H}$ représente la fonction de transfert du canal de transmission étudié.

La matrice $\mathbf{H}$ peut se décomposer de la manière suivante :

$$\mathbf{H} = \mathbf{D} + \mathbf{E} \text{ avec } \mathbf{E} = \begin{bmatrix} 0 & h_{12} & \cdots & h_{1L} \\ h_{21} & 0 & \cdots & \vdots \\ \vdots & \vdots & \ddots & h_{L-1,L} \\ h_{L1} & \cdots & h_{L,L-1} & 0 \end{bmatrix}$$

où les coefficients $h_{mn}$ avec $m \neq n$ sont les coefficients de couplage télédiaphonique.

On procède à un développement en série de $\mathbf{P} = \mathbf{H}^{-1}.\mathbf{D}$ au premier ordre ce qui donne l'équation suivante :

$$\mathbf{P} = \mathbf{H}^{-1}.\mathbf{D} \approx \left( \mathbf{I} - \mathbf{D}^{-1}.\mathbf{E} \right)$$

où I est la matrice identité.

Si s désigne le vecteur unicolonne des signaux à émettre sur chacune des lignes, $\mathbf{x} = \mathbf{Ps}$ est le vecteur unicolonne des signaux précompensés transmis effectivement sur les lignes. Les signaux reçus y s'écrivent alors :

$$\mathbf{y} = \mathbf{HPs} + \mathbf{n} = \mathbf{Ds} + \mathbf{n}$$

Les signaux reçus sont ainsi exempts de toute télédiaphonie.

Selon le nombre de lignes actives que possède le canal de transmission C étudié, les calculs matriciels décrits précédemment peuvent être très complexes et sont à répéter pour chaque fréquence porteuse utilisée. Pour un canal de transmission comportant N lignes actives, le nombre d'opérations à réaliser afin de précompenser la télédiaphonie est de $N^2$ par ligne active pour une fréquence porteuse donnée.

La réduction du nombre de ces calculs devient par conséquent un réel enjeu pour les opérateurs de télécommunications.

Afin de limiter le nombre de ces calculs, une solution consiste à réduire le nombre de coefficients non nuls de la matrice **H**.

En référence à la figure 2, dans une première étape E1 d'un procédé de traitement partiel des interférences, les coefficients de couplage télédiaphonique pour une fréquence porteuse f donnée sont ordonnancés dans le sens croissant. On obtient ainsi un premier ensemble $G_f$ contenant $N(N-1)^2$ coefficients de couplage télédiaphonique $\alpha j$ ordonnés du plus petit au plus grand, $\alpha 1$ étant le coefficient de couplage télédiaphonique de plus petite valeur. Les coefficients de couplage $\alpha j$ constituant l'ensemble $G_f$ correspondent aux coefficients de couplages télédiaphoniques $h_{ij}$ une fois ceux-ci ordonnancés dans le sens croissant. La valeur d'un coefficient de couplage télédiaphonique $h_{ik}$ représente les interférences du signal utile d'une première ligne active k sur le signal utile d'une deuxième ligne active i. Plus la valeur de ce coefficient est grande, plus les interférences sont importantes.

Dans une deuxième étape E2, une somme $S_i$ est initialisée à zéro.

Dans une troisième étape E3, on calcule le rapport signal sur bruit plus interférences SNIR$_i$ (Signal to Noise plus Interferences Ratio) d'une ligne active i à la fréquence porteuse f :

$$SNIR_i = \frac{\left|h_{ii}\right|^2}{S_i + \left(E_x \middle/ N_0\right)^{-1}}$$

où $E_x$ représente l'énergie du signal transmis et $N_0$ un bruit aditif blanc gaussien. Lorsque la somme $S_i$ a pour valeur zéro, la valeur du rapport SNIR$_i$ obtenue correspond à la valeur du rapport signal sur bruit SNR$_i$ de la ligne active i. Le rapport signal sur bruit SNR$_i$ de la ligne active i correspond au cas où les effets de la télédiaphonie ont été supprimés complètement de la ligne active i. Plus la valeur du rapport SNIR$_i$ est faible, plus la ligne active étudiée est perturbée par les interférences issues des autres lignes actives du canal de transmission. Une fois obtenue, la valeur du rapport SNR$_i$ est mémorisée.

Dans une étape E4, la valeur du rapport SNR$_i$ est comparée à la somme de la valeur du rapport SNIR$_i$ et d'une marge $\Delta_i$ fonction de la perte en débit fixée.

On décrit ci-dessous la méthode d'obtention de la valeur de la marge $\Delta_i$ à la fréquence porteuse f :

l'expression du débit maximum théorique $b_c^i$ d'une ligne active donnée i à une fréquence porteuse donnée f est donné par :

$$b_c^i = \log_2\left(1 + \frac{SNR^i}{\Gamma}\right) = \log_2\left(1 + \frac{\left|h_{ii}\right|^2 \cdot \left(E_x \middle/ N_0\right)}{\Gamma}\right)$$

où $\Gamma$ représente la perte d'implémentation associée à une modulation donnée à un taux d'erreur de fonctionnement.

Soit $p_i$ la fraction du débit maximum théorique qu'un opérateur en télécommunications tolère de perdre au profit d'une simplification des calculs de précompensation. Deux approches sont possibles pour déterminer la manière dont il faut répartir la diminution en débit tolérée sur les différentes lignes actives du canal de transmission.

La première approche consiste à prélever sur chaque ligne active une fraction du débit qui lui est alloué. Le résultat est que la fraction de débit prélevée sera plus ou moins importante suivant l'atténuation de la ligne active. Dans ce cas, la fraction de débit prélevée sur la ligne active i au profit d'une complexité moindre est $b_p^i = p_i . b_c^i$.

La deuxième approche consiste à répartir de manière identique la fraction de débit total à prélever sur toutes les lignes actives. Dans ce cas, la fraction de débit prélevée sur la ligne active i est $b_p^i = p_i \Big/ K_u \cdot \sum_{n=1}^{K} b_c^n$, où $K_u$ est le

nombre de fréquences porteuses appartenant au plan de fréquences du canal de transmission.

La marge $\Delta_i$ s'exprime alors de la manière suivante :

$$\Delta_i = 20 \cdot \log 10 \left( \Gamma \cdot \left( 2^{b_c^i} - 1 \right) - \Gamma \cdot \left( 2^{b_c^i - b_p^i} - 1 \right) \right) = 20 \cdot \log 10 \left( \Gamma \cdot 2^{b_c^i} \left( 1 - 2^{-b_p^i} \right) \right)$$

On voit que plus la valeur du rapport $SNIR_i$ est proche de la valeur du rapport $SNR_i$ plus l'influence des autres lignes actives du canal de transmission sur la ligne active étudiée est faible.

Si la valeur du rapport $SNR_i$ est inférieure à la somme de la valeur du rapport $SNIR_i$ et de la marge de perte en débit, alors, une somme $S_i$ est mise à jour au cours d'une étape E5 :

$$S_i' = S_i + \alpha j \text{ et } j = j+1$$

Où $S_i'$ est la somme mise à jour, $S_i$ est la valeur de la somme avant mise à jour et $\alpha j$ est le coefficient de couplage d'indice j pris dans l'ensemble $G_f$. Lors de la première itération de l'étape E5, j= 1.

Une fois la somme $S_i$ mise à jour, une nouvelle valeur du rapport $SNIR_i$ est calculée au cours d'une étape E6.

Aussi longtemps que la valeur du rapport $SNR_i$ est inférieure à la somme de la valeur du rapport $SNIR_i$ et de la marge $\Delta_i$ alors les étapes E5 et E6 sont exécutées.

L'incrément j étant augmenté de 1 à chaque exécution de l'étape E5, l'ensemble $G_f$ des coefficients de couplage télédiaphonique est parcouru au fur et à mesure des itérations.

Lorsque la valeur du rapport $SNR_i$ est supérieure à la somme de la valeur du rapport $SNIR_i$ et de la marge de perte en débit, tous les coefficients de couplage télédiaphonique $\alpha j$ dont l'indice est supérieur ou égal à la valeur de j à l'issue de l'étape E5 forment un nouvel ensemble $T_f$. La création de l'ensemble $T_f$ correspond à une étape E7.

Les coefficients de couplage télédiaphonique appartenant à l'ensemble $T_f$ sont les coefficients de couplage $h_{ij}$ dont les valeurs sont les plus élevées. Ces coefficients représentent par conséquent les interférences qui dégradent le plus sur les performances du canal de transmission telles que le débit utile. En effet, plus les interférences sont importantes plus la valeur du rapport $SNIR_i$ diminue.

Au cours d'une étape E8, tous les coefficients de couplage n'appartenant pas à l'ensemble $T_f$ sont mis à zéro.

Toutes les étapes précédemment décrites sont appliquées pour chaque ligne active du canal de transmission.

A l'issue de cette sélection, on obtient une nouvelle matrice **H'** qui sera utilisée à la place de **H** pour les calculs de précompensation ou d'annulation de la télédiaphonie. Dans cette matrice, une partie des éléments non diagonaux ont une valeur nulle, les autres, correspondent aux coefficients de couplage télédiaphonique appartenant à l'ensemble $T_f$.

Cette nouvelle matrice **H'** comportant plus d'éléments nuls que la matrice **H** de départ, les calculs s'en trouvent simplifiés.

Le nombre de calculs à effectuer pour une ligne active donnée est maintenant de $c(k) = \sum_{i=1}^{N} n_i^{(k)}$ au lieu de

$N^2$ opérations. La complexité globale du système avec traitement partiel est donnée par $c = \sum_{j=1}^{K_u} \sum_{i=1}^{L} n_i^{(k)}$.

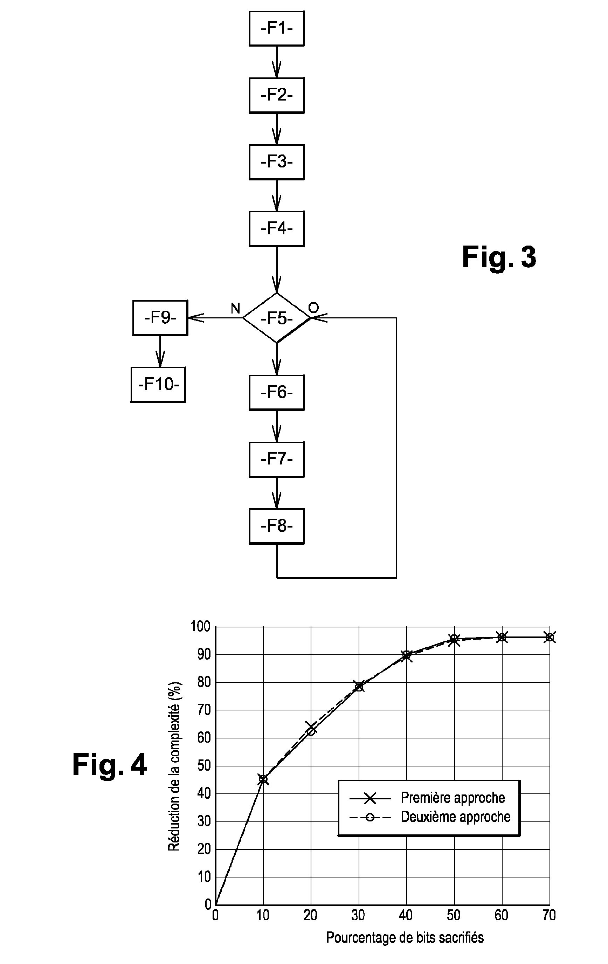

La figure 3 représente un deuxième mode de réalisation du procédé de traitement partiel objet de l'invention. Les étapes du procédé communes aux deux modes de réalisation et déjà décrites en référence à la figure 2 ne seront pas décrites à nouveau.

Au cours d'une première étape F1, la valeur d'un compteur M est initialisée à la valeur N-1 où N est le nombre total de lignes actives du canal de transmission étudié.

Au cours de l'étape F2, les coefficients de couplage télédiaphonique sont ordonnancés dans l'ordre décroissant. On obtient ainsi un premier ensemble $G_f'$ contenant (N-1) coefficients de couplage télédiaphonique ordonnés du plus grand au plus petit.

Au cours d'une étape F3, une somme $S_i$ est calculée de la manière suivante :

$$S_i = \sum_{k=1, i \neq k}^{M+1} \left| h_{ik} \right|^2 = \sum_{l=1}^{M} (\alpha_l)^2$$

où $\alpha_l$ représente les coefficients de couplage télédiaphonique ordonnés.

Au cours d'une étape F4, la valeur du rapport SNIR$_i$ est calculée.

Au cours d'une étape F5, la valeur du rapport SNR$_i$ est comparée à la somme de la valeur du rapport SNIR$_i$ et de la marge $\Delta_i^{(k)}$.

Si la valeur du rapport SNR$_i$ est inférieure à la somme de la valeur du rapport SNIR$_i$ et de la marge $\Delta_i^{(k)}$, alors, le compteur M est décrémenté de 1 :

$$M = M-1,$$

au cours d'une étape F7, la somme $S_i$ est mise à jour, ainsi que la valeur du rapport SNIR$_i$, au cours d'une étape F8.

Aussi longtemps que la valeur du rapport SNR$_i$ est inférieure à la somme de la valeur du rapport SNIR$_i$ et de la marge $\Delta_i^{(k)}$ alors les étapes F6, F7 et F8 sont exécutées.

Lorsque la valeur du rapport SNR$_i$ est supérieure à la somme de la valeur du rapport SNIR$_i$ et de la marge $\Delta_i^{(k)}$, tous les coefficients de couplage télédiaphonique $\alpha j$ dont l'indice j est inférieur ou égal à la valeur de M à l'issue de l'étape F6 forment un nouvel ensemble T'$_f$. La création de l'ensemble T'$_f$ correspond à une étape F9.

Au cours d'une étape F10, la valeur de tous les coefficients de couplage télédiaphonique appartenant à l'ensemble T'$_f$ est mise à zéro.

La figure 4 représente l'évolution de la réduction de la complexité des calculs en fonction de la fraction du débit prélevée selon les deux modes de répartition précédemment décrits.

Sur cette figure, il apparaît que les deux modes de répartition de la fraction de débit prélevée sur les lignes actives du système étudié aboutissent au même ordre de réduction de la complexité des calculs de précompensation de la télédiaphonie.

Accepter de sacrifier 10% du débit théorique du système sur des lignes actives d'une longueur de 600m et d'une longueur de 150m permet de réduire la complexité de traitement des données par le biais de la précompensation ou de l'annulation de l'ordre de 45%.

L'invention concerne encore un DSLAM comportant des moyens de traitement des interférences exercées par un signal utile d'une première ligne active k appartenant à un canal de transmission sur le signal utile d'une deuxième ligne active i appartenant au même canal de transmission, et des moyens de sélection d'un ensemble de coefficients de couplage télédiaphonique, conçus pour sélectionner les coefficients de couplage télédiaphonique conformément à ce qui a été décrit plus haut.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

**Revendications**

1. Procédé de traitement d'interférences dans un canal de transmission comportant N lignes actives, chacune desdites lignes actives véhiculant un signal utile, une interférence générée par le signal utile d'une première ligne active i sur le signal utile d'une deuxième ligne active k étant représentée par un coefficient de couplage, ledit procédé comportant une étape de détermination d'une influence des coefficients de couplage sur les performances dudit canal de transmission et une étape de sélection d'un ensemble de coefficients de couplage à traiter permettant de sélectionner ceux des coefficients de couplage présentant la plus grande influence,
**caractérisé en ce qu'**un coefficient de couplage est sélectionné lorsque l'éloignement de la valeur d'un rapport signal à bruit calculé sans tenir compte des coefficients de couplage à la valeur du rapport signal à bruit calculé en tenant compte dudit coefficient de couplage est inférieur à une marge liée à une perte en débit définie préalablement.

2. Procédé de traitement selon la revendication 1 **caractérisé en ce que** la marge liée à une perte en débit est identique pour toutes les lignes actives du canal de transmission.

3. Procédé de traitement selon l'une des revendications 1 à 2 **caractérisé en ce que** pour une ligne active donnée du canal de transmission, la marge liée à une perte en débit est fonction de l'atténuation de la ligne active.

4. Procédé de traitement selon l'une quelconque des revendications précédentes, **caractérisé en ce que** préalablement à l'étape de détermination, les coefficients de couplage sont ordonnés, et **en ce que** les coefficients de couplage ainsi ordonnés sont balayés jusqu'à obtention d'un premier ensemble de coefficients de couplage à traiter, et un deuxième ensemble de coefficients de couplage non traités.

5. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de traitement des interférences selon l'une au moins des revendications 1 à 4.

6. Equipement réseau connecté à un canal de transmission comportant N lignes actives, chacune desdites lignes actives véhiculant un signal utile, une interférence générée par le signal utile d'une première ligne active i sur le signal utile d'une deuxième ligne active k étant représentée par un coefficient de couplage, ledit dispositif comportant des moyens de détermination d'une influence des coefficients de couplage sur les performances dudit canal de transmission et des moyens de sélection d'un ensemble de coefficients de couplage à traiter permettant de sélectionner ceux des coefficients de couplage présentant la plus grande influence,
**caractérisé en ce qu'**un coefficient de couplage est sélectionné lorsque l'éloignement de la valeur d'un rapport signal à bruit calculé sans tenir compte des coefficients de couplage à la valeur du rapport signal à bruit calculé en tenant compte dudit coefficient de couplage est inférieur à une marge liée à une perte en débit définie préalablement.

**Fig. 1**

**Fig. 2**

**Fig. 3**

**Fig. 4**

**Office européen des brevets**

**RAPPORT DE RECHERCHE EUROPEENNE**

Numéro de la demande

EP 07 12 0999

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 98/10528 A (AMATI COMMUNICATIONS CORP [US]; CIOFFI JOHN M [US]) 12 mars 1998 (1998-03-12) * page 4, ligne 9 - ligne 15 * ----- | 1-6 | INV. H04B3/46 |
| X | EP 1 414 164 A (CIT ALCATEL [FR]) 28 avril 2004 (2004-04-28) * alinéas [0006], [0009], [0044] - [0049] * ----- | 1-6 | |

| DOMAINES TECHNIQUES RECHERCHES (IPC) |
|---|
| H04B |

Le présent rapport a été établi pour toutes les revendications

| Lieu de la recherche | Date d'achèvement de la recherche | Examinateur |
|---|---|---|
| La Haye | 14 janvier 2008 | DE IULIS, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 12 0999

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-2008

| Document brevet cité au rapport de recherche | | Date de publication | Membre(s) de la famille de brevet(s) | | Date de publication |
|---|---|---|---|---|---|
| WO 9810528 | A | 12-03-1998 | AU<br>DE<br>EP<br>US | 4170797 A<br>69736614 T2<br>1048129 A1<br>5887032 A | 26-03-1998<br>27-09-2007<br>02-11-2000<br>23-03-1999 |
| EP 1414164 | A | 28-04-2004 | CN<br>US | 1499734 A<br>2004086064 A1 | 26-05-2004<br>06-05-2004 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Partial Crosstalk Precompensation for Downstream VDSL. Elsevier Signal Processing, Novembre 2004

- **CENDRILLON.** Partial Crosstalk Cancellation for Upstream VDSL. *EURASIP Journal on Applied Signal Processing,* Août 2004